# EUROPÄISCHE PATENTSCHRIFT

(11) **EP 2 127 430 B1**
(45) Veröffentlichungstag und Bekanntmachung des Hinweises auf die Patenterteilung: **14.03.2012**
(21) Anmeldenummer: 08707130.4
(22) Anmeldetag: 18.01.2008
(51) Int. Cl.: H04W 24/06

(54) **TESTVORRICHTUNG UND MOBILFUNKGERÄT SOWIE VERFAHREN ZUM TESTEN EINES MOBILFUNKGERÄTS**
TEST DEVICE, MOBILE RADIO DEVICE AND METHOD FOR TESTING A MOBILE RADIO DEVICE
DISPOSITIF DE TEST ET APPAREIL DE TÉLÉPHONIE MOBILE, AINSI QUE PROCÉDÉ PERMETTANT DE TESTER UN APPAREIL DE TÉLÉPHONIE MOBILE

(30) Priorität: 27.03.2007 DE 102007014692
(43) Veröffentlichungstag der Anmeldung: 02.12.2009
(73) Patentinhaber: Rohde & Schwarz GmbH & Co. KG, 81671 München (DE)
(72) Erfinder: SCHUMACHER, Adrian, 81541 München (DE)
(74) Vertreter: Beder, Jens
(86) Internationale Anmeldenummer: PCT/EP2008/000389
(87) Internationale Veröffentlichungsnummer: WO 2008/116516

(56) Entgegenhaltungen:
- EP-A- 1 388 966
- EP-A- 1 696 682
- WO-A-00/59250
- WO-A-2006/047677
- WO-A-2006/092462
- GB-A- 2 370 458
- GB-A- 2 386 295
- US-A1- 2005 267 715
- US-A1- 2006 040 654
- US-A1- 2006 229 018
- US-B1- 6 208 841

## Beschreibung

Die Erfindung betrifft ein Verfahren zum Testen eines Mobilfunkgeräts sowie ein entsprechendes Mobilfunkgerät und eine Testvorrichtung.

In der Produktion von Mobilfunkgeräten wird zum Überprüfen der Funktion sowie des Einhaltens der Spezifikationen jedes fertig gestellte Mobilfunkgerät überprüft. Bei dieser Überprüfung wird das Mobilfunkgerät mit einem Tester bzw. einer Testvorrichtung verbunden. Diese Testvorrichtung emuliert dabei eine Basisstation. Zwischen der Testvorrichtung und dem Mobilfunkgerät wird daher gemäß der jeweils gültigen Spezifikation eine Verbindung aufgebaut. Über diese Verbindung, die in der Regel kabelgebunden ausgeführt wird, wird dem Mobilfunkgerät eine Testsequenz übermittelt. Diese Testsequenz wird in dem Mobilfunkgerät in einer Testschleife abgearbeitet und durch das Mobilfunkgerät ein Antwortsignal erzeugt, das zurück an die Testvorrichtung übertragen wird. Aufgrund des Erzeugens des Testsignals in der Testvorrichtung ist der Testvorrichtung ein Antwortsignal bekannt, wie es im Idealfall einer fehlerfreien Bearbeitung des Testsignals durch das Mobilfunkgerät zurückgesendet wird. Die Testvorrichtung kann daher aufgrund des tatsächlich von dem Mobilfunkgerät empfangenen Antwortsignals durch Vergleich mit dem erwarteten Antwortsignal beispielsweise eine Bitfehlerraten- oder Blockratenbestimmung durchführen.

Bei den bekannten Testverfahren sowie der entsprechenden Testvorrichtung und dem Mobilfunkgerät ist es nachteilig, dass das Mobilfunkgerät mit der Testvorrichtung lediglich über eine Schnittstelle verbunden ist. Auf diese Weise können zwar die internen Datenverarbeitungen durch das Mobilfunkgerät überprüft werden, es ist jedoch nicht möglich, eine Überprüfung eines gewählten Übertragungswegs durchzuführen. Eine Umschaltfunktion zwischen mehreren vorhandenen Antennen, die dem Mobilfunkgerät bei einer Verbindung zur Verfügung stehen, kann daher nicht erfolgen. Insbesondere ist es nicht möglich, eine Korrelation zwischen der Auswahl der jeweils zur Übertragung verwendeten Antenne und dem Prüfergebnis zu erhalten.

Die Druckschrift "method and apparatus for measuring and optimising the quality of data transmission" offenbart ein Verfahren und eine Vorrichtung zum Test der down-link - Verbindung eines Mobilfunksystems. Dabei wird ein Testsignal erzeugt und an ein Mobilfunkgerät gesendet. Das Mobilfunkgerät wertet das Signal aus und erzeugt ein Antwortsignal welches von der Testvorrichtung ausgewertet wird.

Das Dokument US 2005/0267715 A1 offenbart ein Verfahren und eine Vorrichtung welche die Übertragung eines Testsignals über den Funkkanal nutzen um Parameter zur Simulation des Funkkanals zu gewinnen. Die gewonnenen Parameter beschreiben zumindest einen Funkkanal in seinen räumlichen wie zeitlichen Eigenschaften.

Es ist daher die Aufgabe der Erfindung, ein Verfahren sowie eine entsprechende Testvorrichtung und ein Mobilfunkgerät zu schaffen, welches die Überprüfung der Auswahl einer zur Übertragung eingesetzten Antenne des Mobilfunkgeräts ermöglicht.

Die Aufgabe wird durch das erfindungsgemäße Verfahren nach den Merkmalen des Anspruchs 1 sowie die erfindungsgemäße Testvorrichtung mit den Merkmalen des Anspruchs 7 und das Mobilfunkgerät mit den Merkmalen des Anspruchs 9 gelöst.

Bei dem erfindungsgemäßen Testverfahren wird in einer Testvorrichtung ein Testsignal erzeugt. Das Testsignal wird durch eine Signalerzeugungseinheit generiert. Diese Testssequenz, z.B. eine Bitfolge, wird einem bestimmten Mobilfunkstandard entsprechend in ein zu sendendes Testsignal umgesetzt. Das so gesendete Testsignal wird an das Mobilfunkgerät übertragen. Durch das Mobilfunkgerät wird das Testsignal empfangen und ausgewertet. Aus dem ausgewerteten Testsignal oder zumindest unter Berücksichtigung des ausgewerteten Testsignals wird durch das Mobilfunkgerät ein Antwortsignal erzeugt. Das Mobilfunkgerät legt ferner ein Übertragungsschema zum Senden des Antwortsignals zurück an die Testvorrichtung fest, welches evtl. auch schon von der Basisstation bzw. der Testvorrichtung vorgegeben sein kann. In dem Übertragungsschema wird dabei die Verwendung einer Mehrzahl von Antennen des Mobilfunkgeräts definiert. Die Übertragung gemäß dem Übertragungsschema kann dabei entweder über lediglich eine von mehreren Antennen oder aber über mehrere Antennen gemeinsam mit einer vorgegebenen Leistungs- und Phasenverteilung erfolgen.

Entsprechend dem so festgelegten Übertragungsschema wird durch das Mobilfunkgerät das Antwortsignal zurück an die Testvorrichtung übertragen. Die Testvorrichtung empfängt das Antwortsignal und kann das von dem Mobilfunkgerät verwendete Übertragungsschema ermitteln.

Das erfindungsgemäße Verfahren hat den Vorteil, dass nicht nur die Auswertung des Inhalts eines an das Mobilfunkgerät gesendeten Testsignals durch Auswerten des Antwortsignals überprüft wird, sondern dass auch eine interne Funktion des Mobilfunkgeräts durch die Testvorrichtung überprüft wird. Damit kann insbesondere auch indirekt überprüft werden, ob in dem Mobilfunkgerät ein Algorithmus implementiert ist, welcher eine Auswahl aus verschiedenen Übertragungsschemata bzw. die Festlegung eines Übertragungsschemas ermöglicht.

Gemäß der erfindungsgemäßen Testvorrichtung ist hierzu in der Testvorrichtung eine Verzweigungsvorrichtung angeordnet. Die Verzweigungsvorrichtung ist einerseits mit einer Sende-/Empfangsvorrichtung der Testvorrichtung und andererseits mit zumindest einem ersten Anschluss und einem zweiten Anschluss verbunden. Mittels des ersten Anschlusses bzw. des zweiten Anschlusses kann eine Verbindung zu dem Mobilfunkgerät erzeugt werden. Das erfindungsgemäße Mobilfunkgerät weist in entsprechender Weise eine erste Antenne und eine zweite Antenne auf, wobei jeder Antenne ein separater Messanschluss zugeordnet ist. Mit Hilfe einer Kabelverbindung kann so der jeweilige Antennenanschluss mit einem Anschluss der Testvorrichtung verbunden werden. Seitens der Testvorrichtung lässt sich damit ermitteln, über welchen Anschluss der Testvorrichtung das Antwortsignal empfangen wurde.

In den Unteransprüchen sind vorteilhafte Weiterbildungen des erfindungsgemäßen Verfahrens sowie der Testvorrichtung und des Mobilfunkgeräts ausgeführt.

Insbesondere ist es vorteilhaft, dass jede Antenne des Mobilfunkgeräts mit einem Anschluss der Testvorrichtung verbunden wird und aus den über die einzelnen Anschlüsse der Testvorrichtung empfangenen Antwortsignale bzw. Signalteile durch Vergleich das Übertragungsschema ermittelt wird.

In der Verzweigungsvorrichtung der Testvorrichtung ist hierzu eine Vergleichsvorrichtung angeordnet. Diese Vergleichsvorrichtung ist so eingerichtet, dass die über den ersten Anschluss bzw. den zweiten Anschluss der Testvorrichtung empfangenen Signalteile miteinander verglichen werden können. Dieser Vergleich ist die Basis zur Ermittlung des Übertragungsschemas des Mobilfunkgeräts.

Gemäß einer weiteren bevorzugten Ausführungsform wird das so ermittelte Übertragungsschema durch die Testvorrichtung gespeichert. Ferner wird das ausgewertete Antwortsignal gespeichert und bei der Speicherung des ermittelten Übertragungsschemas bzw. des ausgewerteten Antwortsignals werden Informationen zur zeitlichen Zuordnung des ausgewerteten Antwortsignals und des Übertragungsschemas abgespeichert. Diese zeitliche Verknüpfung des ermittelten Übertragungsschemas sowie des ausgewerteten Antwortsignals erlaubt es, die Auswertung des Antwortsignals in Bezug zu dem gewählten Übertragungsweg über eine der in dem Mobilfunkgerät vorhandenen Antennen und damit die Wirkungsweise bei der Festlegung bzw. Auswahl des Übertragungsschemas zu überprüfen.

Weiterhin ist es vorteilhaft, wenn dem Mobilfunkgerät durch die Testvorrichtung vorgegeben werden kann, welches Übertragungsschema für die Rücksendung des Antwortsignals zur verwenden ist. Hierzu weist die Testvorrichtung eine Signalerzeugungseinheit auf, die bei der Erzeugung des Testssequenz ein Übertragungsschema vorgibt, das durch das Mobilfunkgerät zu verwenden ist. Mit dem daraufhin gesendeten Testsignal, das entsprechende Informationen über das zu verwendende Übertragungsschema enthält, wird also dem Mobilfunkgerät eine Anweisung gegeben, welches Übertragungsschema für die Rücksendung des Antwortsignals zu verwenden ist. Das Mobilfunkgerät weist hierzu vorzugsweise eine Ansteuereinheit auf, die mit der Sende-/Empfangseinheit und einer Verbindungssteuereinheit zum Steuern des Übertragungswegs über die zumindest erste Antenne und/oder zweite Antenne verbunden ist. Entsprechend weist die Testvorrichtung eine Signalerzeugungseinheit mit einer Vorgabeeinrichtung auf. Die Vorgabeeinrichtung ist zur Vorgabe eines Übertragungsschemas eingerichtet.

Dabei ist es besonders bevorzugt, wenn das ermittelte Übertragungsschema aus den über die Anschlüsse der Testvorrichtung empfangenen Signalteilen ermittelt wird.

Gemäß einer weiteren bevorzugten Ausführungsform werden die Signalteile, die in der Testvorrichtung über die einzelnen Anschlüsse empfangen werden, zur Auswertung des Antwortsignals zusammengeführt. Damit wird das gesamte Antwortsignal unabhängig von seinem Signalweg bei der Übertragung von dem Mobilfunkgerät zur der Testvorrichtung als Basis zur Ermittlung beispielsweise einer Bitfehlerrate oder einer Blockfehlerrate verwendet.

Gemäß einer weiteren bevorzugten Ausführungsform wird bei der Erzeugung des Antwortsignals eine Information über ein verwendetes Empfangsschema beim Empfang von Signalen des Testsignals erzeugt. Auf Basis dieses Antwortsignals kann bei der Auswertung des empfangenen Antwortsignals durch die Testvorrichtung eine Information darüber erhalten werden, ob die Auswahl zwischen verschiedenen Übertragungsschemata beim Empfang von Signalen durch das Mobilfunkgerät korrekt und insbesondere wie durch das Testsignal vorgegeben erfolgt.

Eine bevorzugte Ausführungsform des erfindungsgemäßen Verfahrens sowie der Testvorrichtung und des Mobilfunkgeräts sind in der Zeichnung dargestellt und werden in der nachfolgenden Beschreibung näher erläutert. Es zeigen:
- Fig.: lein Blockschaltbild eines Testaufbaus mit einer Testvorrichtung und einem Mobilfunkgerät; und
- Fig.: 2 eine schematische Darstellung zur Durchführung des erfindungsgemäßen Verfahrens.

Zur Durchführung des erfindungsgemäßen Verfahrens werden eine Testvorrichtung 1 und ein Mobilfunkgerät 2 miteinander verbunden. Die Testvorrichtung 1 umfasst das eigentliche Testgerät 3 zum Erzeugen eines zu sendenden Testsignals und zum Auswerten eines von dem Mobilfunkgerät 2 zurückgesendeten Antwortsignals. Das Testgerät 3 ist mit einer Verzweigungsvorrichtung 4 gekoppelt. Die Verzweigungsvorrichtung 4 und das Testgerät 3 können entweder in Form zweier eigenständiger Geräte oder aber integriert ausgeführt sein. Während im ersten Fall die Möglichkeit besteht, vorhandene Testgeräte 3 mit lediglich einem Anschluss für ein zu testendes Mobilfunkgerät nachzurüsten und so die Umschaltfunktion zwischen mehreren Antennen des Mobilfunkgeräts 2 zu überprüfen, ist im letztgenannten Fall, bei dem die Verzweigungsvorrichtung 4 in das Testgerät 3 der Testvorrichtung 1 integriert ist vorgesehen, zwei Anschlüsse zur Verbindung mit den korrespondierenden Messanschlüssen des Mobilfunkgeräts 2 zu verbinden.

Das Testgerät 3 umfasst eine Signalerzeugungseinheit 5 zum Erzeugen einer Testssequenz. Die Testssequenz besteht aus einer Abfolge von Informationen, für die eine bestimmte Reaktion des verbundenen Mobilfunkgeräts 2 erwartet wird. Diese Testssequenz wird von der Signalerzeugungseinheit 5 einer Sende-/Empfangseinheit 6 zugeführt und dort zu einem zu sendenden Testsignal weiterverarbeitet. Die Sende-/Empfangseinheit ist über eine Verbindungsstelle 8 mit der Verzweigungsvorrichtung 4 verbunden. Die Sende-/Empfangseinheit ist ferner mit einer Auswerteeinheit 7 verbunden. In der Auswerteeinheit 7 wird das durch das Mobilfunkgerät 2 in Reaktion auf das Testsignal zurückgesendete Antwortsignal ausgewertet. Aus den ausgewerteten Antwortsignalen kann beispielsweise eine Bitfehlerrate oder eine Blockfehlerrate bestimmt werden. Ferner ist beispielsweise die Reaktion auf eine durch die emulierte Basisstation geforderte Leistungsanpassung messbar.

In dem Mobilfunkgerät 2 ist eine erste Antenne 9 und eine zweite Antenne 10 vorgesehen. Jeder Antenne 9, 10 ist jeweils ein Messanschluss 11 bzw. 12 in dem Mobilfunkgerät 2 zugeordnet. Vor der Durchführung des erfindungsgemäßen Verfahrens wird der erste Messanschluss 11 mit einem ersten Anschluss 13 der Testvorrichtung 1 und der zweite Messanschluss 12 mit dem zweiten Anschluss 14 der Testvorrichtung 1 verbunden. Zur Verbindung des ersten Messanschlusses 11 mit dem ersten Anschluss 13 der Testvorrichtung 1 wird eine erste Leitung 15 verwendet. Entsprechend ist der zweite Messanschluss 12 des Mobilfunkgeräts 2 mit dem zweiten Anschluss 14 der Testvorrichtung 1 über eine zweite Leitung 16 verbunden. Die leitungsmäßige Verbindung zwischen der Testvorrichtung 1 und dem Mobilfunkgerät 2 stellt sicher, dass Störeinflüsse, die bei Übertragung auf dem Funkweg entstehen, ausgeschlossen werden können. Ferner ist anders als bei einer Funkübertragung sichergestellt, dass durch Auswerten der an dem ersten Anschluss 13 bzw. dem zweiten Anschluss 14 empfangenen Signalanteile durch die Testvorrichtung 1 der Übertragungsweg zwischen dem Mobilfunkgerät 2 und der Testvorrichtung 1 in eindeutiger Weise festgestellt werden kann.

Eine durch die Signalerzeugungseinheit 5 erzeugte Testsequenz wird in bereits beschriebener Weise durch die Sende-/Empfangseinheit 6 entsprechend einer Spezifikation eines bestimmten Mobilfunkstandards in ein zu sendendes Testsignal weiterverarbeitet. Dieses Testsignal wird vorzugsweise über den ersten Anschluss 13 und den zweiten Anschluss 14 der Testvorrichtung 1 gleichermaßen zu dem Mobilfunkgerät 2 übertragen. Das Übertragen über beide Leitungen 15, 16 hat den Vorteil, dass das korrekte Empfangen durch das Mobilfunkgerät 2 unabhängig von dem tatsächlich verwendeten Empfangsschema sichergestellt ist. Eine fehlerhafte Auswertung der ersten Antenne 9 oder der zweiten Antenne 10 bzw. der zugeordneten Messanschlüsse 11 oder 12 durch das Mobilfunkgerät 2 beeinflusst die korrekte Zuführung des Testsignals nicht.

Das von dem Mobilfunkgerät 2 empfangene Testsignal wird einer Sende-/Empfangseinrichtung 18 des Mobilfunkgeräts 2 zugeführt. Diese Sende-/Empfangseinrichtung 18 beinhaltet auch Mittel zum Auswerten des Inhalts des empfangenen Testsignals. Die Sende-/Empfangseinrichtung 18 ist vorzugsweise mit den Antennen 9 und 10 über eine Verbindungssteuerungsvorrichtung 19 verbunden. Die Verbindungssteuerungsvorrichtung 19 steuert die Verbindung zwischen der Sende-/Empfangseinrichtung 18 und der ersten Antenne 9 bzw. der zweiten Antenne 10 und damit auch die Verbindung der Sende-/Empfangseinrichtung 18 mit dem ersten Messanschluss 11 bzw. dem zweiten Messanschluss 12.

Ein Übertragungsschema ist im einfachsten Fall durch die Verbindung der Sende-/Empfangseinrichtung 18 mit einer der zwei dargestellten Antennen 9, 10 definiert. In einem solchen Fall ist die Verbindungssteuerungsvorrichtung 19 in Form eines Schalters 20 ausgeführt, der den einzelnen Anschluss der Sende-/Empfangseinrichtung 18 mit den zu der ersten Antenne 9 bzw. der zweiten Antenne 10 führenden Leitungen verbindet. In diesem einfachen Fall wird die Sende-/Empfangseinrichtung 18 jeweils nur mit einer der Antennen 9, 10, verbunden. Das Übertragungsschema kann jedoch auch eine Verbindung gleichzeitig mit beiden Antennen 9,10 zulassen. In diesem Fall werden beispielsweise durch das Mobilfunkgerät 2 zu sendende Antwortsignale sowohl über die erste Antenne 9 als auch über die zweite Antenne 10 gesendet. Dabei legt das Übertragungsschema fest, mit welchen Phasen Signalanteile über die einzelnen Antennen 9, 10 bzw. mit welchen Leistungsanteilen die jeweiligen Signalteile über die Antennen 9, 10 gesendet werden.

In entsprechender Weise wird auch ein Empfangsschema durch die Sende-/Empfangsvorrichtung 18 festgelegt. Bei der Sende-/Empfangsvorrichtung 18 wird somit festgelegt, in welcher Weise das an den beiden Messanschlüssen 11, 12, bzw. über die Antennen 9, 10 empfangene Signal bzw. Signalanteile ausgewertet werden.

Gemäß einer bevorzugten Ausführungsform wird durch die Testvorrichtung 1 festgelegt, in welcher Weise das zurückgesendete Antwortsignal durch das Mobilfunkgerät 2 über den ersten Messanschluss 11 bzw. den zweiten Messanschluss 12 übertragen wird. Hierzu ist eine Vorgabeeinrichtung 5' als Bestandteil der Signalerzeugungseinheit 5 der Testvorrichtung 1 vorgesehen. Die Vorgabeeinrichtung 5' gibt ein für die Rücksendung des Antwortsignals zu verwendendes Übertragungsschema vor. Unter Berücksichtigung des so vorgegebenen zu verwendenden Übertragungsschemas wird durch die Signalerzeugungseinheit 5 eine Testssequenz erzeugt. Das daraus erzeugte Testsignal beinhaltet damit Informationen, die durch das Mobilfunkgerät 2 ausgewertet werden können. Das so an das Mobilfunkgerät 2 gesendete Testsignal wird durch das Mobilfunkgerät 2 bzw. dessen Sende-/Empfangseinrichtung 18 ausgewertet. Bei der Auswertung des Inhalts des übermittelten Testsignals wird auch das vorgegebene zu verwendende Übertragungsschema erkannt. Um dieses Übertragungsschema umzusetzen ist eine Ansteuereinheit 21 vorgesehen. Die Ansteuereinheit 21 ist mit der Sende-/Empfangsvorrichtung 18 verbunden. Die Ansteuereinheit 21 ist ebenfalls mit der Verbindungssteuerungseinheit 19 verbunden. Auf Basis des ausgewerteten Testsignals legt die Ansteuereinheit 21 das Übertragungsschema für das Zurücksenden des Antwortsignals fest und steuert die Verbindungssteuerungseinheit 19 an.

Die Testvorrichtung 1 weist ferner eine Vergleichseinrichtung 22 auf. Die Vergleichsvorrichtung 22 ist in der Verzweigungsvorrichtung 4 vorgesehen und so eingerichtet, dass über den ersten Anschluss 13 bzw. den zweiten Anschluss 14 ankommende Signale bzw. Signalanteile miteinander verglichen werden können. Dieser Vergleich des über den ersten Anschluss 13 ankommenden Signalanteils mit dem über den zweiten Anschluss 14 der Testvorrichtung 1 ankommenden Signalanteil gibt Aufschluss über den jeweils zu einem Zeitpunkt zum Übertragen des Antwortsignals verwendeten Messanschluss 11, 12 und somit die entsprechend den Übertragungsschema verwendete Antenne 9, 10 des Mobilfunkgeräts 2. Die Vergleichsvorrichtung 22 ermittelt wie bereits beschrieben durch Vergleich der Signalanteile des ersten Anschlusses 13 und des zweiten Anschlusses 14 das Übertragungsschema und übermittelt die Information über das Übertragungsschema über einen zweiten Verbindungspunkt 24,an eine Speichereinrichtung 23. Die Speichereinrichtung 23 ist ferner mit der Auswerteeinheit 7 verbunden. Damit wird der Speichereinheit 23 durch die Auswerteeinheit 7 auch das ausgewertete Antwortsignal zugeführt. Bei der Abspeicherung des ermittelten Übertragungsschemas sowie des ausgewerteten Antwortsignals wird vorzugsweise eine Information über den zeitlichen Zusammenhang zwischen dem ermittelten Übertragungsschema und dem Antwortsignal abgespeichert. Dies erlaubt Rückschlüsse über in dem Antwortsignal auftretende Ereignisse im Hinblick auf die Auswahl der ersten Antenne 9 bzw. der zweite Antenne 10.

Die Auswertung des Antwortsignals selbst erfolgt dagegen einheitlich. Das heißt, die Signalanteile, die über den ersten Anschluss 13 bzw. den zweiten Anschluss 14 der Testvorrichtung 1 zugeführt werden, werden in einem Summierungspunkt 17 zusammengeführt und damit gemeinsam der Sende-/Empfangsvorrichtung 6 des Testgeräts 3 zugeführt. Die Auswertung des Antwortsignals hinsichtlich Bitfehler bzw. Blockfehler wird somit unabhängig von dem gewählten Übertragungsweg über die erste Leitung 15 bzw. die zweite Leitung 16 ausgewertet.

In dem dargestellten Ausführungsbeispiel wird die Verwendung von lediglich zwei Antennen 9, 10 und in entsprechender Weise einer Verzweigungsvorrichtung 4 der Testvorrichtung 1 der zwei Anschlüsse 13, 14 beschrieben. Es ist jedoch leicht ersichtlich, dass auch die Verwendung von mehr als zwei Antennen in entsprechender Weise möglich ist.

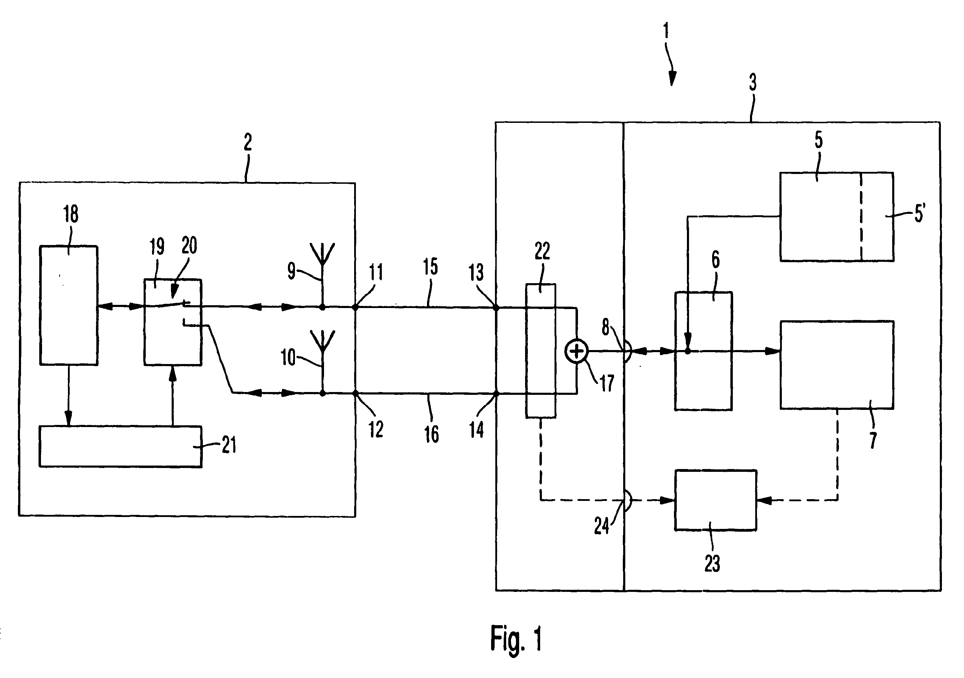

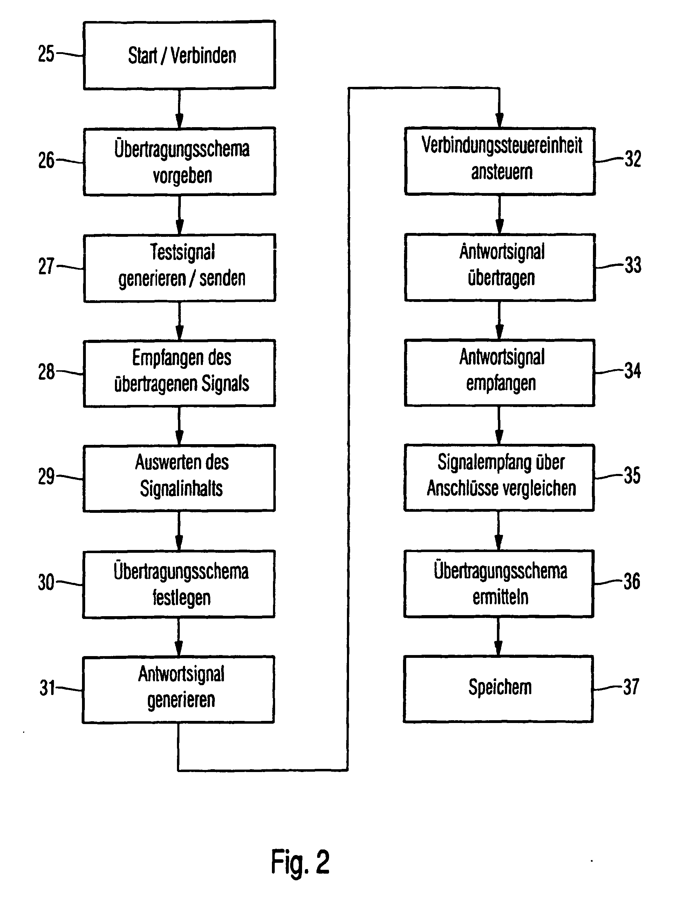

Die Durchführung des erfindungsgemäßen Verfahrens ist noch einmal in dem Flussdiagramm der Fig. 2 dargestellt. Zunächst wird zum Starten des Verfahrens im Schritt 25 das Mobilfunkgerät 2 mit der Testvorrichtung 1 verbunden. Hierzu wird über eine Kabelverbindung der erste und der zweite Messanschluss 11, 12 des Mobilfunkgeräts 2 mit der Testvorrichtung 1 bzw. dessen Anschlüssen 13, 14 verbunden. Anschließend wird gemäß der bevorzugten Ausführungsform durch die Vorgabeeinrichtung 5' ein zu verwendendes Übertragungsschema vorgegeben (Schritt 26). Unter Berücksichtigung dieses zu verwendenden Übertragungsschemaa wird durch die Signalerzeugungsvorrichtung 5 eine Testsignalsequenz generiert (Schritt 27). Diese Testsequenz wird mittels der Sende-/Empfangsvorrichtung 6 der Testvorrichtung 1 zu einem Testsignal weiterverarbeitet und gesendet, also an das Mobilfunkgerät 2 übertragen (Schritt 28).

Das durch das Mobilfunkgerät 2 empfangene Testsignal wird (Schritt 29) durch die Sende-/Empfangseinrichtung 18 des Mobilfunkgeräts 2 ausgewertet und aus dem ausgewerteten Inhalt des übertragenen Testsignals das zu verwendende Übertragungsschema ermittelt. Das Übertragungsschema wird dann durch die Ansteuervorrichtung 21 festgelegt (Schritt 30) und dementsprechend die Verbindungssteuerungseinrichtung 19 angesteuert. Durch die Sende-/Empfangseinrichtung 18 des Mobilfunkgeräts 2 wird ferner ein Antwortsignal festgelegt. Dies kann im einfachsten Fall das Rücksenden eines Signals identischen Inhalts sein, wie es nach Demodulation und Umwandeln der so erhaltenen Sequenz mit anschließender Modulation erhalten wird. Das Antwortsignal wird nun entsprechend dem festgelegten Übertragungsschema zurückgesendet also an die Testvorrichtung 1 übertragen (Schritt 33). Dabei erfolgt die Übertragung im einfachsten Fall, wie dies bereits erläutert wurde, entweder über den ersten Messanschluss 11 oder den zweiten Messanschluss 12. In Abhängigkeit von dem festgelegten Übertragungsschema kann jedoch auch über beide Messanschlüsse 11, 12 jeweils ein Signalanteil übertragen werden. Die so von der Testvorrichtung 1 empfangenen Signalanteile, die über den ersten Anschluss 13 bzw. den zweiten Anschluss 14 der Verzweigungsvorrichtung 4 zugeführt werden, werden durch die Auswerteeinheit 7 des Testgeräts 3 gemeinsam ausgewertet.

Die empfangenen Signalanteile der Anschlüsse 13 bzw. 14 werden ferner durch die Vergleichsvorrichtung 22 miteinander verglichen (Schritt 35). Aus dem Vergleich wird das durch das Mobilfunkgerät 2 festgelegte Übertragungsschema ermittelt (Schritt 36). Das Ergebnis der Auswertung durch die Auswerteeinheit 7 und das ermittelte Übertragungsschema wird in der Speichereinrichtung 23 abgespeichert (Schritt 37).

Bei der Beschreibung des Verfahrens wird davon ausgegangen, dass das durch das Mobilfunkgerät 2 zu verwendende Übertragungsschema a priori bei der Erzeugung eines Testsignals durch die Testvorrichtung 1 vorgegeben wird. Das Verfahren ist jedoch ebenso durchführbar, wenn eine solche Vorgabe des zu verwendenden Übertragungsschemas durch die Testvorrichtung 1 nicht erfolgt. Die Auswahl und das Festlegen eines Übertragungsschemas erfolgt dann durch die Ansteuereinheit 21 auf der Seite des Mobilfunkgeräts 2.

In entsprechender Weise kann durch die Testvorrichtung 1 auch die für den Empfang des Testsignals zu verwendende Antenne 9 bzw. 10 und damit der entsprechende Messanschluss 11 bzw. 12 festgelegt werden und über das Testsignal an das Mobilfunkgerät 2 übermittelt werden. In diesem Fall wird dann durch die Sende-/Empfangseinrichtung 18 des Mobilfunkgeräts 2 ein Antwortsignal erzeugt, indem die Information über das tatsächlich verwendete Empfangsschema enthalten ist. Durch die Rücksendung eines so gebildeten Antwortsignals wird dann auf der Seite der Testvorrichtung 1 auch eine Auswertung des jeweils verwendeten Empfangsschemas ermöglicht. Diese Auswertung erfolgt jedoch nicht durch die Vergleichsvorrichtung 22 sondern durch die Auswerteeinheit 7, indem dort der Inhalt des zurückgesendeten Antwortsignals durch die Auswerteeinheit 7 analysiert wird.

Die Erfindung ist nicht auf die dargestellten Ausführungsbeispiele beschränkt. Vielmehr sind auch die Kombinationen einzelner Merkmale miteinander möglich.

## Patentansprüche

1. Verfahren zum Testen eines Mobilfunkgeräts mit zumindest einer ersten Antenne (9) und einer zweiten Antenne (10), mit folgenden Verfahrensschritten:
- Erzeugen eines Testsignals (27) durch eine Signalerzeugungseinheit (5) einer Testvorrichtung (1)
- Senden des Testsignals an ein zu testendes Mobilfunkgerät (2)
- Empfangen des Testsignals (28) durch das Mobilfunkgerät (2)
- Auswerten des Testsignals (29) durch das Mobilfunkgerät (2)
- Erzeugen eines Antwortsignals (31) durch das Mobilfunkgerät (2)
- Senden des Antwortsignals (33),
- Empfangen des Antwortsignals (34) durch die Testvorrichtung (1) und
- Auswerten des empfangenen Antwortsignals (35, 36)
**dadurch gekennzeichnet,**
**dass** in dem durch die Signalerzeugungseinheit (5) erzeugten Testsignal ein zum Senden des Antwortsignals zu verwendendes Übertragungsschema, in dem die Verwendung einer Mehrzahl von Antennen des Mobilfunkgeräts definiert wird, vorgegeben wird (26) und dass das Antwortsignal (33) entsprechend dem Übertragungsschema über die erste Antenne (9) oder zweite Antenne (10) gesendet wird und dass
das verwendete Übertragungsschema in einer Vergleichsvorrichtung (22) in der Testvorrichtung (1) ermittelt wird (36).

2. Verfahren nach Anspruch 1,
**dadurch gekennzeichnet,**
**dass** mit jeder Antenne (9, 10) des Mobilfunkgeräts (2) jeweils ein Anschluss (13, 14) der Testvorrichtung (1) verbunden wird und das verwendete Übertragungsschema zum Senden des Antwortsignals durch Vergleich von an den einzelnen Anschlüssen (13, 14) ankommenden Signalanteilen (35) ermittelt wird.

3. Verfahren nach Anspruch 1 oder 2,
**dadurch gekennzeichnet,**
**dass** das Antwortsignal durch die Testvorrichtung ausgewertet wird und dass das ermittelte Übertragungsschema durch die Testvorrichtung gespeichert wird und das ausgewertete Antwortsignal gespeichert wird (37), wobei bei der Speicherung des ermittelten Übertragungsschemas und/oder des ausgewerteten Antwortsignals Informationen zur zeitlichen Zuordnung des ausgewerteten Antwortsignals und des ermittelten Übertragungsschema abgespeichert werden.

4. Verfahren nach Anspruch 1 bis 3,
**dadurch gekennzeichnet,**
**dass** das ermittelte Übertragungsschema mit dem vorgegebenen zu verwendenden Übertragungsschema verglichen wird.

5. Verfahren nach einem der Ansprüche 1 bis 4,
**dadurch gekennzeichnet,**
**dass** die über die Anschlüsse (13, 14) der Testvorrichtung (1) empfangenen Signalteile zur Auswertung des Antwortsignals zusammengeführt werden.

6. Verfahren nach einem der Ansprüche 1 bis 5,
**dadurch gekennzeichnet,**
**dass** das Mobilfunkgerät (2) in dem Antwortsignal Informationen über ein Übertragungsschema der zum Empfang von Signalen verwendeten Antennen (9, 10) überträgt.

7. Testvorrichtung mit einer Signalerzeugungseinheit (5) und einer Auswerteeinheit (7), die mit einer Sende-/Empfangseinrichtung (6) verbunden sind, und einer Verzweigungsvorrichtung (4), die die Sende-/Empfangsvorrichtung (6) mit zumindest einem ersten Anschluss (13) und einem zweiten Anschluss (14) verbindet, wobei die Sende-/Empfangseinrichtung (6) zum Empfangen eines Antwortsignals ausgestaltet ist,
**dadurch gekennzeichnet,**
**dass** der erste Anschluss (13) und der zweite Anschluss (14) mittels jeweils einer Leitung (15, 16) mit jeweils einer Antennenmessbuchse (11, 12) des Mobilfunkgeräts (2) verbindbar sind,
**dass** die Auswerteeinheit (7) zur Ermittlung des verwendeten Übertragungsschemas des Mobilfunkgerätes ausgestaltet ist, und
**dass** die Signalerzeugungseinheit (5) eine Vorgabeeinrichtung (5') zur Vorgabe eines Übertragungsschemas umfasst.

8. Testvorrichtung nach Anspruch 7,
**dadurch gekennzeichnet,**
**dass** die Verzweigungsvorrichtung (4) eine Vergleichsvorrichtung (22) aufweist, die zum Vergleich von über den ersten Anschluss (13) und den zweiten Anschluss (14) empfangenen Signalteilen eingerichtet ist.

9. Mobilfunkgerät mit zumindest einer Sende-/Empfangseinrichtung (18) und zumindest einer ersten Antenne (9) mit Messanschluss (11) und zumindest einer zweiten Antenne (10),
**dadurch gekennzeichnet,**
**dass** jeder zweiten Antenne (10) ein separater Messanschluss (12) zugeordnet ist,
**dass** die Sende-/Empfangseinheit (18) über eine Verbindungssteuerungseinheit (19) mit der ersten Antenne (9) und jeder weiteren Antenne (10) verbunden ist,
**dass** eine Ansteuereinheit (21) mit der Sende-/Empfangseinheit (18) und der Verbindungssteuerungseinheit (19) verbunden ist,
**dass** die Sende-/Empfangseinheit (18) so eingerichtet ist, dass sie ein Antwortsignal erzeugt,
**dass** die Sende-/Empfangseinheit (18) und zumindest eine Antenne (9, 10) so eingerichtet sind, dass sie das Antwortsignal entsprechend einem Übertragungsschema aussenden, und
**dass** die Sende-/Empfangseinheit (18) so eingerichtet ist, dass durch sie aus dem ausgewerteten Inhalt des empfangenen Testsignals das für das Antwortsignal zu verwendende Übertragungsschema ermittelbar ist.

## Claims

1. A method for testing a mobile-radio device with at least one first antenna (9) and a second antenna (10), with the following method steps:
- Generation (27) of a test signal by a signal generating unit (5) of a test device (1);
- Transmission of the test signal to a mobile-radio device under test (2);
- Reception (28) of the test signal by the mobile-radio device (2);
- Evaluation (29) of the test signal by the mobile-radio device (2);
- Generation (31) of a response signal by the mobile-radio device (2);
- Transmission (33) of the response signal;
- Reception (34) of the response signal by the test device (1) ; and
- Evaluation (35, 36) of the received response signal,
**characterised in that**,
a transmission pattern used for the transmission of the response signal , in which the use of a plurality of antennas of the mobile-radio device is defined, is specified (26) in the test signal generated by the signal generating unit (5); and
that the response signal is transmitted (33) via the first antenna (9) or second antenna (10) according to the transmission pattern and that
the transmission pattern used is determined (36) in a comparison device (22) within the test device (1).

2. The method according to claim 1,
**characterised in that**
a terminal (13, 14) of the test device (1) is connected to each antenna (9, 10) of the mobile-radio device (2), and the transmission pattern used for the transmission of the response signal is determined by comparison of signal components (35) received at the individual terminals (13, 14).

3. The method according to claim 1 or 2,
**characterised in that**
the response signal is evaluated by the test device, and that the determined transmission pattern is buffered by the test device and the evaluated response signal is buffered (37), wherein, in the buffering of the determined transmission pattern and/or of the evaluated response signal, information on the time allocation of the evaluated response signal and of the determined transmission pattern is buffered.

4. The method according to claim 1 to 3,
**characterised in that**
the determined transmission pattern is compared with the specified transmission pattern to be used.

5. The method according to any one of claims 1 to 4,
**characterised in that**
the signal components received via the terminals (13, 14) of the test device (1) are combined for the evaluation of the response signal.

6. The method according to any one of claims 1 to 5,
**characterised in that**
the mobile-radio device (2) transmits information in the response signal regarding a transmission pattern of the antennas (9, 10) used for the reception of signals.

7. A test device with a signal generating unit (5) and an evaluation unit (7) which are connected to a transmitter/receiver device (6), and a branching device (4) which connects the transmitter/receiver device (6) to at least one first terminal (13) and a second terminal (14), wherein the transmitter/receiver device (6) is embodied for the reception of a response signal,
**characterised in that**
the first terminal (13) and the second terminal (14) can be connected respectively by means of a line (15, 16) in each case to an antenna test bush (11, 12) of the mobile-radio device (2),
that the evaluation unit (7) is embodied for the determination of the transmission pattern of the mobile-radio device used, and
that the signal generating unit (5) comprises a specification device (5') for the specification of a transmission pattern.

8. The test device according to claim 7,
**characterised in that**
the branching device (4) provides a comparison device (22) which is set up for the comparison of signal components received via the first terminal (13) and the second terminal (14).

9. A mobile-radio device with at least one transmitter/receiver device (18) and at least one first antenna (9) with test terminal (11) and at least one second antenna (10),
**characterised in that**
a separate test terminal (12) is allocated to each second antenna (10),
that the transmitter/receiver unit (18) is connected via a connection control unit (19) to the first antenna (9) and to each further antenna (10), that a control unit (21) is connected to the transmitter/receiver unit (18) and to the connection control unit (19),
that the transmitter/receiver unit (18) is set up in such a manner that it generates a response signal,
that the transmitter/receiver unit (18) and at least one antenna (9, 10) are set up in such a manner that they transmit the response signal according to a transmission pattern, and
that the transmitter/receiver unit (18) is set up in such a manner that it can determine the transmission pattern to be used for the response signal from the evaluated content of the received test signal.

## Revendications

1. Procédé pour tester un appareil de téléphonie mobile avec au moins une première antenne (9) et une deuxième antenne (10), avec les étapes de procédé suivantes:
- génération d'un signal de test (27) par une unité de génération de signaux (5) d'un dispositif de test (1)
- transmission du signal de test à un appareil de téléphonie mobile (2) à tester
- réception du signal de test (28) par l'appareil de téléphonie mobile
- évaluation du signal de test (29) par l'appareil de téléphonie mobile (2)
- génération d'un signal de réponse (31) par l'appareil de téléphonie mobile (2)
- transmission du signal de réponse (33),
- réception du signal de réponse (34) par le dispositif de test (1) et
- évaluation du signal de réponse reçu (35, 36),
**caractérisé en ce que** dans le signal de test généré par l'unité de génération de signaux (5), un schéma de transmission à utiliser pour la transmission du signal de réponse est prédéfini (26) en définissant l'utilisation d'une pluralité d'antennes de l'appareil de téléphonie mobile, et **en ce que** le signal de réponse (33), conformément au schéma de transmission, est transmis par la première antenne (9) ou la deuxième antenne (10), et **en ce que** le schéma de transmission utilisé est déterminé (36) dans un dispositif de comparaison (22) dans le dispositif de test (1).

2. Procédé selon la revendication 1, **caractérisé en ce qu'**est relié à chaque antenne (9, 10) de l'appareil de téléphonie mobile (2) à chaque fois un raccord (13, 14) du dispositif de test (1), et **en ce que** le schéma de transmission utilisé pour la transmission du signal de réponse est déterminé (35) par une comparaison de parties de signal arrivant aux raccords individuels (13, 14).

3. Procédé selon la revendication 1 ou 2, **caractérisé en ce que** le signal de réponse est évalué par le dispositif de test, et **en ce que** le schéma de transmission déterminé est stocké par le dispositif de test et le signal de réponse évalué est stocké (37), où lors du stockage du schéma de transmission déterminé et/ou du signal de réponse évalué, des informations se rapportant à l'association temporelle du signal de réponse évalué et du schéma de transmission déterminé sont stockées.

4. Procédé selon la revendication 1 à 3, **caractérisé en ce que** le schéma de transmission déterminé est comparé avec le schéma de transmission prédéfini à utiliser.

5. Procédé selon l'une des revendications 1 à 4, **caractérisé en ce que** les parties de signal reçues par les raccords (13, 14) du dispositif de test (1) sont réunies pour évaluer le signal de réponse.

6. Procédé selon l'une des revendications 1 à 5, **caractérisé en ce que** l'appareil de téléphonie mobile (2) transmet dans le signal de réponse des informations se rapportant à un schéma de transmission des antennes (9, 10) utilisées pour la réception de signaux.

7. Dispositif de test avec une unité de génération de signaux (5) et une unité d'évaluation (7), qui sont reliées à une installation d'émission/réception (6), et un dispositif de branchement (4) qui relie le dispositif d'émission/réception (6) à au moins un premier raccord (13) et un deuxième raccord (14), où l'installation d'émission/réception (6) est réalisée pour la réception d'un signal de réponse, **caractérisé en ce que** le premier raccord (13) et le deuxième raccord (14) peuvent être à chaque fois reliés au moyen d'un conduit (15, 16) avec à chaque fois une douille de mesure d'antenne (11, 12) de l'appareil de téléphonie mobile (2), **en ce que** l'unité d'évaluation (7) est réalisée pour la détermination du schéma de transmission utilisé de l'appareil de téléphonie mobile, et **en ce que** l'unité de génération de signaux (5) comprend une installation de spécification (5') pour la spécification d'un schéma de transmission.

8. Dispositif de test selon la revendication 7, **caractérisé en ce que** le dispositif de branchement (4) présente un dispositif de comparaison (22) qui est agencé pour la comparaison de parties de signal reçues par le premier raccord (13) et le deuxième raccord (14).

9. Appareil de téléphonie mobile avec au moins une installation d'émission/réception (18) et au moins une première antenne (9) avec un raccord de mesure (11) et au moins une deuxième antenne (10), **caractérisé en ce qu'**est associé à chaque deuxième antenne (10) un raccord de mesure séparé (12),
**en ce que** l'unité d'émission/réception (18) est reliée par une unité de commande de connection (19) à la première antenne (9) et à chaque autre antenne (10), **en ce qu'**une unité de commande (21) est reliée à l'unité d'émission/réception (18) et à l'unité de commande de connection (19),
**en ce que** l'unité d'émission/réception (18) est installée de façon à produire un signal de réponse,
**en ce que** l'unité d'émission/réception (18) et au moins une antenne (9, 10) sont agencées de façon à émettre le signal de réponse conformément à un schéma de transmission, et
**en ce que** l'unité d'émission/réception (18) est agencée de façon à déterminer à partir du contenu évalué du signal de test reçu, le schéma de transmission à utiliser pour le signal de réponse.
